# EUROPEAN PATENT APPLICATION

(11) **EP 4 781 821 A1**
(43) Date of publication of application: **29.07.2026**
(21) Application number: 25154158.7
(22) Date of filing: 27.01.2025
(51) Int. Cl.: A01G 25/00, F16L 37/00, F16L 55/00, E03B 9/02, F04D 29/00

(54) **A WATER CONNECTOR ASSEMBLY**

(71) Applicant: Husqvarna AB, 561 82 Huskvarna (SE)
(72) Inventor: Renner, Thomas, 89079 Ulm (DE)
(74) Representative: Finkele, Rolf

(57) **Abstract**

A water connector assembly (**100**) comprises a first water connection device (**200**), and a second water connection device (**300**) removably couplable with the first water connection device (**200**). The first water connection device (**200**) comprises at least one first support element (**216**) and at least one second support element (**218**). The water connector assembly (**100**) is characterized in that the at least one first support element (**216**) and the at least one second support element (**218**) are configured to respectively inhibit and allow the decoupling between the first water connection device (**200**) and the second water connection device (**300**) when a lateral force (**P**) acting substantially perpendicular to an extension of the at least one first support element (**216**) and at the least one second support element (**218**) respectively is applied on the first water connection device (**200**).

## Description

### A WATER CONNECTOR ASSEMBLY

### TECHNICAL FIELD

The present disclosure relates to a water connector assembly for removably coupling a first water connection device with a second water connection device.

### BACKGROUND

Lawns or gardens, require regular watering of the various vegetation, such as, plants, grass etc. The known systems and/or methods for watering comprise sprinkler systems, drip irrigation systems etc. However, such installations may be expensive and require regular maintenance. Therefore, such installations may not be suitable for residential lawns and gardens which are usually small in size.

A cheaper alternative is to water the lawn or garden using a manually guided hose connected to a water source, such as, a tap of a water mains. However, in case the lawn or garden is located at a substantial distance from the water mains, connecting the hose directly to the water mains may be inconvenient or infeasible. For example, the hose may get entangled if the length of the hose is substantially long.

A subterranean mounted shaft arrangement for installation in an outdoor location to allow access to the water mains is also known, wherein water is supplied to the shaft arrangement via a at least partly subterranean water conduit. The shaft arrangement is provided with a connector (preferably nipple) on subterranean level for connection of a garden hose using a snap-in coupler. The shaft arrangement is further suitable for connection with low irrigation devices (having height less than 30 cm) such as water computer, or sprinkler. However, for high plug-on devices (having height greater than 30 cm) such as tap point, hose box, spiral hose holder, garden shower, etc., which are pluggable or connectable directly to the connector of the shaft arrangement, there is an acute risk of breakage of the connector due to the large lever when pulling it sideways or stepping against it.

Furthermore, the coupling mechanism for coupling and decoupling the high plug-on devices and the connector is located directly at ground level, i.e., to open the connection, a user is required to bend down to decouple the high plug-on devices from the connector. Further, if the shaft arrangement is located, for example, in a hedge or a flower bed, the coupling mechanism may be difficult to reach as plants make it difficult to access.

An example of an automatic decoupling mechanism is provided by United States Patent US 4,269,226 A (hereinafter referred to as '226 reference). The '226 reference discloses a breakaway coupling for fluid systems wherein interconnected coupling parts separate upon predetermined bending or tension forces being applied to the respective parts. A bending or tension force applied to one part axially misaligned with respect to the other part produces a pivotal movement which automatically releases the coupling connection means permitting the parts to separate without damage.

### SUMMARY OF THE INVENTION

In view of the above, it is an objective of the present invention to solve or at least reduce the drawbacks discussed above. The objective is at least partially achieved by a water connector assembly.

According to an aspect of the present invention, the water connector assembly for a garden watering application comprises a first water connection device comprising a female coupling element, and a second water connection device comprising a male coupling element and a housing with a support surface, particularly a substantially ring-shaped support surface, arranged around the male coupling element. The male coupling element and the female coupling element are removably couplable with each other. Further, the first water connection device comprises at least one first support element and at least one second support element.

The water connector assembly is characterized in that the at least one first support element and the at least one second support element are arranged, particularly annularly arranged, around the female coupling element such that the arrangement, particularly the annular arrangement, corresponds to the support surface. A free end of the at least one first support element is formed such that, when a lateral force acting substantially perpendicular to an extension of the first support element, acts on the first water connection device, the free end contacts the support surface, and a decoupling of the first water connection device from the second water connection device is inhibited. Further, a free end of the at least one second support element is formed such that, when a lateral force acting substantially perpendicular to an extension of the second support element, acts on the first water connection device and exceeds a pre-defined value, the free end interacts with an inner side of the support surface, and the first water connection device is decoupled from the second water connection device.

The present invention provides an improved water connector assembly that is used for irrigation purposes, and additionally may also be used for any other industrial or domestic applications. The water connector assembly comprises the first water connection device and the second water connection device that is configured to be coupled and decoupled in a tool less manner, and without using any additional accessory. Additionally, the decoupling of the first water connection device and the second water connection device may be easily and ergonomically in predefined direction and at the same time applying forces in other predefined directions will result in an inhibiting of the decoupling. A decoupling in predefined directions may be easily and ergonomically be possible. At the same time, an overload in other pre-defined directions may be inhibited by automatically decoupling the first water connection device from the second water connection device when to high forces in defined direction act on the first water connection device. The first water connection device of the water connector assembly may be any irrigation or spraying device that may have significant height of at least 10 cm, preferably 30 cm or more. The first water connection device, irrespective of the type, and due to its height, may be utilized by a user to decouple or dislodge the first water connection device from the second water connection device in an easy, fail-safe, ergonomic, and stable manner. Further, the decoupling of the first water connection device from the second water connection device is done in an indirect manner. In other words, the user may not be required to directly touch or hold either the female coupling element or the male coupling element of the water connector assembly to decouple the first water connection device from the second water connection device.

Further, the water connector assembly comprises the at least one first support element and the at least one second support element arranged around the female coupling element. The at least one first support element and at least one second support element are configured to respectively inhibit and allow the decoupling between the first water connection device and the second water connection device when the lateral force acting substantially perpendicular to the extension of the at least one first support element respectively the at least one second support element is applied on the first water connection device. The lateral force may be intentionally applied by the user. Alternatively, the lateral force may be an inadvertent force, which may or may not be applied by the user. When the decoupling between the first water connection device and the second water connection device in a specific direction is not desirable, the user may rotate the first water connection device in a manner such that when the lateral force acts in the specific direction on the first water connection device, the free end of the at least one first support element contacts the support surface, and the decoupling of the first water connection device from the second water connection device is inhibited. Further, when the decoupling between the first water connection device and the second water connection device in a specific direction is desirable, the user may rotate the first water connection device in a manner such that when the lateral force acts in the specific direction on the first water connection device and exceeds the pre-defined value, the free end of the at least one second support element interacts with the inner side of the support surface, and allows the first water connection device to be decoupled from the second water connection device.

In other words, the first water connection device may be decoupled from the second water connection device only in a predefined radially direction(s) of the water connector assembly. The decoupling in other radially direction(s) may be inhibited. Further, the water connector assembly may provide an effective overload protection due to decoupling of the first water connection device from the second water connection device when too high loads or lateral force in predefined radially direction may occur.

The term substantially perpendicular according to the present disclosure may be defined as angle between 80° and 100°, in particular 85° to 95°, more in particular of substantially 90°.

According to an exemplary embodiment of the invention, the water connection assembly may be able to receive and distribute any liquid. However, for the ease of understanding of the disclosure, liquid is referred to as water, as it is a widely used liquid for irrigation and other gardening applications.

According to an exemplary embodiment of the invention, the free end of each of the at least one first support element is further formed such that an overload of the male coupling element is inhibited. When the lateral force is applied on the first water connection device, the free end of the at least one first support element contacts the support surface. In this way, the overload due to the lateral force is transferred to the support surface of the second water connection device and the male coupling element is protected from damage.

According to an exemplary embodiment of the invention, each of the at least one first support element and/or the at least one second support element is formed as a part of an annulus, wherein the part of the annulus extends over an angle of substantially 120°, in particular 90°, more in particular 60°. The at least one first support element and the at least one second support element may be arranged, particularly annularly arranged, around the female coupling element such that the arrangement, particularly the annular arrangement, corresponds to the support surface. Particularly, the support surface particularly is a substantially ring-shaped support surface, arranged around the male coupling element.

According to an exemplary embodiment of the invention, the at least one first support element is two first support elements, and/ or the at least one second support element is four second support elements. Particularly, one of the two first support elements is arranged between two of the four second support elements, and two of the four second support elements are arranged adjacent to each other. The number and arrangement of the at least one first support element, and/ or the at least one second support element may be as per application requirement. In other words, when going around the female coupling element, a first support element, two second support elements, a first support element followed by two second support elements are circularly arranged next to each other. Alternatively, another arrangement and/or another number of first support elements and/or second support elements may be foreseen depending on the application.

According to an exemplary embodiment of the invention, the free end of, particularly each of, the at least one first support element and the at least one second support element comprises a radially inner section and a radially outer section seen in a direction substantially perpendicular to the extension of the respective support element, wherein the radially inner section and the radially outer section together form the free end. In particular the radially inner section of, particularly each of, the at least one first support element and the at least one second support element comprises a shape complementary to the inner side of the support surface of the second water connection device.

The radially inner section of the free end of the at least one first support element and the at least one second support element may engage respectively come in contact with the support surface of the second water connection device when the first water connection device is tilted relative to the second water connection device. This engagement respectively contact between the radially inner section of the free end of the at least one first support element and the at least one second support element and the support surface may provide a relative gliding of the at least one first support element and the at least one second support element relative to the inner side of the support surface of the second water connection device.

Further, the radially outer section of the free end of the at least one first support element and the at least one second support element may get activated or engage with the support surface only when the first water connection device may get tilted due to the application of the lateral force on the first water connection device. Then, the radially outer section of each of the at least one first support element comes in contact and interacts with the support surface of the second water connection device such that a decoupling of the first water connection device from the second water connection device is inhibited. Further, the radially outer section of each of the at least one second support element comes in contact with the inner side of the support surface of the second water connection device such that the first water connection device is decoupled from the second water connection device, when a pre-defined lateral force is exceeded.

The free end of the at least one first support element is formed such that, when a lateral force acting substantially perpendicular to an extension of the first support element respectively perpendicular to the flow direction through the first water connection device, acts on the first water connection device, the free end of the first support element contacts the support surface, and a decoupling of the first water connection device from the second water connection device is inhibited. When the lateral force acting substantially perpendicular to the extension of the first support element, acts on the first water connection device, the first water connection device tilts due to the lateral force, the radially outer section of the free end of the first support element contacts respectively takes support on the support surface. In addition, the radially inner section gets in contact with the inner side of the support surface. Thereby, further tilting of the first water connection device is prevented. Consequently, the second housing part solely slightly gets in contact with the support surface. Further, the second housing part does not move translationally relative to the first housing part. Hence, decoupling of the first water connection device from the second water connection device is inhibited. Hence, the decoupling of the first water connection device from the second water connection device is also prevented.

According to an exemplary embodiment of the invention, the radially inner section of, particularly each of, the at least one first support element and/or the at least one second support element is inclined by an angle α relative to a flow direction of a fluid flowing from the second water connection device to the first water connection device. The angle α is less than 90° and greater than 0°, particularly less than 75° and greater than 15°, more particularly less than 60° and greater than 30°, even more particularly substantially equal to 45°. The angle α may be such that the radially inner section of the free end of the at least one first support element and/or the at least one second support element comprises a shape complementary to the inner side of the support surface. Particularly, the angle α may be such that the radially inner section of the free end of the at least one first support element and the at least one second support element may respectively engage with the support surface of the second water connection device to stabilize the mounting of the first water connection device on the second water connection device. Each of the radially inner sections may have the same angle α. Alternatively, at least two of the radially inner sections may have different angles α. The choice of the angle α depends on the application.

The term flow direction according to the present disclosure may denote the main direction of flow of water during use of the water connector assembly. The flow direction may substantially coincide with a central axis of the female coupling element and/or a central axis of the male coupling element, extending substantially parallel to the extension of the at least one first support element and/or the at least one second support element.

According to an exemplary embodiment of the invention, the radially outer section of the free end of, particularly each of, the at least one first support element extends substantially perpendicular to a flow direction of a fluid flowing from the second water connection device to the first water connection device. Thereby, the radially outer section of the free end of the at least one first support element is configured to be activated or engaged with the support surface of the second water connection device, when the first water connection device is tilted due to the application of the lateral force on the first water connection device. The radially outer section of the free end of the at least one first support element, when engaged with the support surface of the second water connection device, disallows or inhibits the decoupling of the first water connection device from the second water connection device, even when an increased lateral force is applied.

According to an exemplary embodiment of the invention, the radially outer section of the free end of, particularly each of, the at least one second support element is inclined by an angle β relative to a flow direction of a fluid flowing from the second water connection device to the first water connection device. The angle β is less than 90° and greater than 0°, particularly less than 75° and greater than 15°, more particularly less than 60° and greater than 30°, even more particularly substantially equal to 45°. When the lateral force acting substantially perpendicular to the extension of the at least one second support element is applied on the first water connection device, and exceeds a pre-defined value, the radially outer section of the free end of the at least one second support element slides over the support surface and inwards towards the inner side of the support surface and allows decoupling of the first water connection device from the second water connection device.

According to an exemplary embodiment of the invention, the angle β is substantially equal to the angle α. The angle β may preferably be substantially equal to the angle α such that the free end of the at least one second support element slides on the inner side of the support surface and allows decoupling of the first water connection device from the second water connection device.

According to an exemplary embodiment of the invention, the first water connection device further comprises a further housing at least partially housing the female coupling element. The further housing comprises a first housing part and a second housing part, wherein the second housing part is movable relative to the first housing part. The water connector assembly allows decoupling of the first water connection assembly from the second water connection assembly even when direct contact or access to the female coupling element and the male coupling element is inhibited for the user. The decoupling does not require any cumbersome mechanical linkages, or any external tool, or actuator.

According to an exemplary embodiment of the invention, the first housing part and/or the second housing part may be made from acrylonitrile styrene acrylate (ASA). According to an exemplary embodiment of the invention, the first housing part and/or the second housing part may be made from styrene butadiene block copolymer (SBC).

According to an exemplary embodiment of the invention, particularly each of, the at least one first support element and at least one second support element extend from the first housing part. When the user may desire to inhibit decoupling of the first water connection device from the second water connection device, the user may adjust the radial orientation of the first housing part such that upon applying the lateral force on the first water connection device, the free end of the at least one first support element may take support on the support surface of the second water connection device. Also, the user may adjust the radial orientation of the first housing part when a decoupling in a specific radial direction should be inhibited, e.g., due to external influences such as plants onto which the first water connection device should not fall. Further, when the user may desire to allow decoupling of the first water connection device from the second water connection device, the user may adjust the radial orientation of the first housing part such that upon applying the lateral force on the first water connection device, the free end of the at least one second support element may slide inwards on the inner side of the support surface of the second water connection device, and lose support from the support surface.

According to an exemplary embodiment of the invention, the water connector assembly is configured such that, when the male coupling element and the female coupling element are removably coupled with each other, the male coupling element and the female coupling element are at least partially surrounded by the housing and the further housing. Even when the female coupling element and the male coupling element are at least partially surrounded by the housing and the further housing, the decoupling of the first water connection device from the second water connection device may be executed with ease and without direct access of the male coupling element or the female coupling element. Further, an intrusion of foreign elements, such as dirt, leaves, and the like, into an inside of the water connector assembly may be substantially prevented. According to an exemplary embodiment of the invention, the male coupling element is a nipple, and the female coupling element is a hose coupler.

According to an exemplary embodiment of the invention, the first water connection device is one of the group comprising a hose box, a hose holder, and an upright pipe unit with an attachable garden shower or tap. The first water connection device may be removably couplable with the second water connection device for water distribution. The first water connection device may preferably be any high irrigation device having a significant height of at least 10cm, particularly at least 20cm, more in particular 30cm. Alternatively, the first water connection device according to the present invention is a water computer. Further, the first water connection device may be provided with the decoupling mechanism that may allow the user to decouple the first water connection device from the second water connection device in an ergonomic manner.

According to an exemplary embodiment of the invention, the second water connection device is a water station or a water socket. The water socket may be a subterranean mounted shaft arrangement for installation in an outdoor location, such as gardens, to allow access to the water mains located in remote location. The water may be supplied to the shaft arrangement via a at least partly subterranean water conduit respectively water pipeline. The shaft arrangement may be provided with the male coupling element on subterranean level for removable connection with the female coupling element of the first water connection device.

Before discussing the invention with the help of the drawings, the invention will be briefly discussed in general. A water connector assembly is provided with a first water connection device and a second water connection device. The first water connection device is removably couplable with the second water connection device. The decoupling between the first water connection device and the second water connection device is done via a decoupling mechanism with integrated overload protection. This allows the safe and easy attachment and removal of the first water connection device, in particular, high irrigation devices such as a hose box, a hose holder, and an upright pipe unit with an attachable garden shower or tap, on the second water connection device, without risk of damage to a male coupling element of the second water connection device.

The water connector assembly according to the present invention comprises a decoupling mechanism with integrated overload protection for the second water connection device. The decoupling mechanism may prevent damage to the male coupling element, when a user may step against the first water connection device or on application of an inadvertent external force on the first water connection device. Further, the decoupling mechanism with integrated overload protection may automatically unlock when a certain release force, for example, 10N or 30N is exceeded.

The water connector assembly according to the present invention may allow easy decoupling of the high irrigation devices having height of at least 10cm, particularly at least 20cm, more in particular 30cm, such as the hose box, the hose holder, and the upright pipe unit with the attachable garden shower or tap, from the second water connection device. The decoupling may be done by pulling a handle or a linkage associated with the high irrigation devices with low efforts.

According to an exemplary embodiment of the invention, the water connector assembly may comprise the first water connection device that may further comprise at least one first support element and at least one second support element arranged, particularly annularly arranged, around a female coupling element of the first water connection device. The at least one first support element and the at least one second support element may have different geometry, i.e., either with a chamfer, and/ or with a step.

When a lateral force acting substantially perpendicular to an extension of the support element with one step, may act on the first water connection device, the support element with one step may be supported on an upper surface of a support surface provided with the second water connection device. This may prevent the male coupling element from breaking off due to application of the lateral force on the first water connection device.

Further, when a lateral force acting substantially perpendicular to an extension of the support element with chamfer, may act on the first water connection device, the support element with chamfer may be supported by an oblique part of the support surface provided with the second water connection device. This may create a resulting force on the support element with chamfer, whereby it may bend radially inwards. As a result, the first water connection device may tilt further to the side due to the lateral force application. As a result, the first water connection device may rest on the upper surface of the support surface and may be pushed upwards by the further tilting movement of the first water connection device. As a result, an actuating sleeve that may be positively connected to the first water connection device, may also be pushed upwards. As a result, resilient locking elements associated with the female coupling element may be unlocked, and thus the connection with the male coupling element may be loosened.

Further, the lateral force acting on the first water connection device may be influenced by the stiffness of the at least one first support element and the at least one second support element, for example, by the length of the at least one first support element and the at least one second support element, i.e., the shorter the length, the higher the lateral force required for decoupling of the first water connection device from the second water connection device, and vice versa.

Further, the decoupling force may be asymmetrical and arbitrarily adjustable, i.e., in the direction of the extension of the support elements, the decoupling force required may be, for example, 30N, and in the lateral direction substantially perpendicular to the extension of the support elements, the decoupling force required may only be, for example, 10N.

According to an exemplary embodiment of the invention, the water connector assembly may comprise one or more additional ribs on the side of the first water connection device facing the support surface during removable coupling with the second water connection device. This may ensure that the first water connection device may be prematurely supported on the support surface of the second water connection device, and thus the decoupling may be triggered with a lower force.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a water connector assembly according to an exemplary embodiment of the present invention;
**FIG. 2** illustrates an exploded cross-sectional view of a first water connection device according to an exemplary embodiment of the present invention;
**FIGS. 3** illustrates a cross-sectional view of a first water connection device according to an exemplary embodiment of the present invention;
**FIG. 4** illustrates a bottom view of a first housing part according to an exemplary embodiment of the present invention;
**FIG. 5** illustrates a bottom view of a first water connection device according to an exemplary embodiment of the present invention;
**FIG. 6** illustrates a cross-sectional view of a water connector assembly according to an exemplary embodiment of the present invention;
**FIG. 7** illustrates another cross-sectional view of a water connector assembly according to an exemplary embodiment of the present invention;
**FIG. 8** illustrates a cross-sectional view of a water connector assembly, with a lateral force acting on a first water connection device according to an exemplary embodiment of the present invention;
**FIG. 9** illustrates yet another cross-sectional view of a water connector assembly according to an exemplary embodiment of the present invention;
**FIG. 10** illustrates another cross-sectional view of a water connector assembly, with a lateral force acting on a first water connection device according to an exemplary embodiment of the present invention;
**FIG. 11** illustrates a perspective view of a water connector assembly with an upright pipe unit with an attachable tap being removably coupled with a water socket according to an exemplary embodiment of the present invention;
**FIG. 12** illustrates a perspective view of a water connector assembly with an upright pipe unit with an attachable tap decoupled from a water socket according to an exemplary embodiment of the present invention;
**FIG. 13** illustrates a perspective view of a water connector assembly with an upright pipe unit with an attachable garden shower being removably coupled with a water socket according to an exemplary embodiment of the present invention; and
**FIG. 14** illustrates a perspective view of a water connector assembly with an upright pipe unit with an attachable garden shower decoupled from a water socket according to an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/ or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radially", "circumferential", or the like, merely describe the configuration shown in the Figures. Indeed, the components may be oriented in any direction and the terminology, therefore, should be understood as encompassing such variations unless specified otherwise.

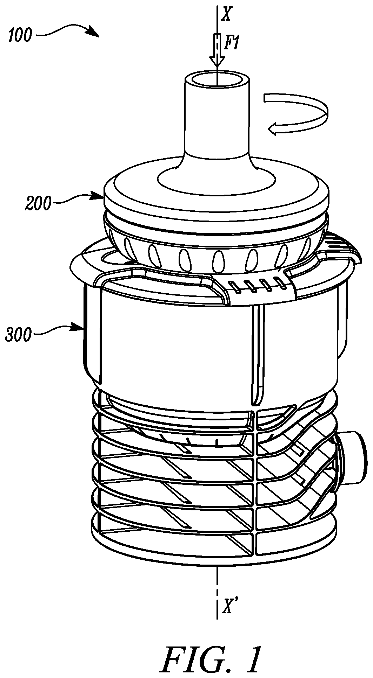

**FIG. 1** illustrates a perspective view of a water connector assembly 100 for a garden watering application. The water connector assembly 100 defines a longitudinal axis X-X' of the water connector assembly 100. The water connector assembly 100 comprises a first water connection device 200 and a second water connection device 300. The first water connection device 200 is removably couplable with the second water connection device 300 by application of a pushing force F1 on the first water connection device 200 along the longitudinal axis X-X' of the water connector assembly 100, as illustrated in **FIG. 1****.** Further, the first water connection device 200 is rotatable relative to the second water connection device 300, in particular rotatable by 360 degrees. In other words, in the coupled state of the first water connection device 200 and the second water connection device 300, an orientation of the first water connection device 200 is changeable.

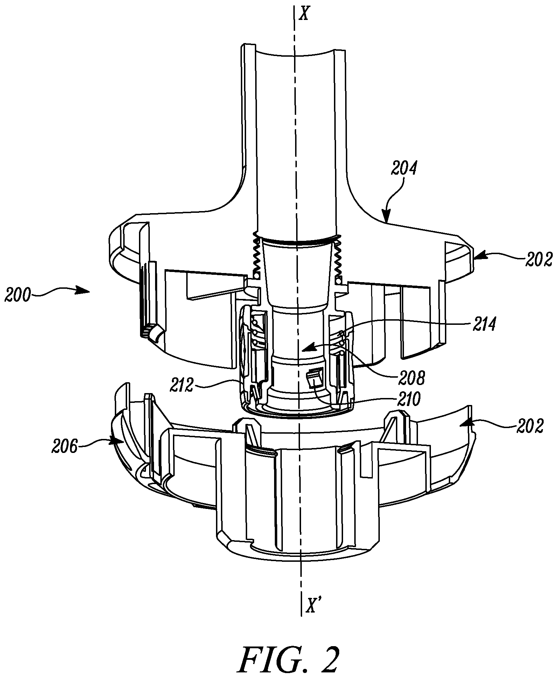

**FIG. 2** illustrates an exploded cross-sectional view of the first water connection device 200. The first water connection device 200 comprises a further housing 202. The further housing 202 comprises a first housing part 204 and a second housing part 206. The first housing part 204 and the second housing part 206 are removably couplable with each other. Further, a female coupling element 208 is mounted on the first housing part 204. The female coupling element 208 extends downwards from the first housing part 204 along the longitudinal axis X-X'. The first housing part 204 and the female coupling element 208 are threadedly engaged with each other.

The female coupling element 208 is formed as a snap-in coupler. The female coupling element 208, as illustrated in **FIG. 2** is a hose coupler. The female coupling element 208 comprises at least one resilient locking element 210, an actuating sleeve 212, which is adapted to functionally engage and disengage with the at least one resilient locking element 210. The actuating sleeve 212 has an annular elongated structure. Further, a spring 214 is mounted to the female coupling element 208 on an inside surface of the actuating sleeve 212.

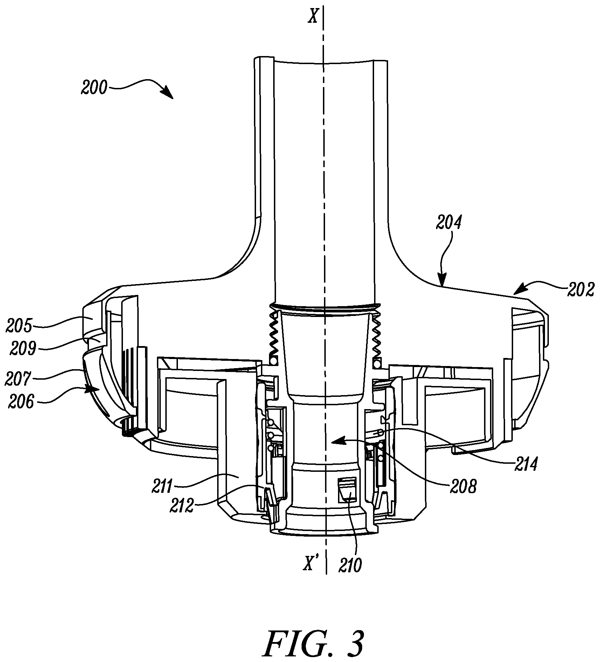

**FIG. 3** illustrates a cross-sectional view of the first water connection device 200. The first water connection device 200 comprises the further housing **202** which comprises the first housing part 204 and the second housing part 206. The second housing part 206 is movable mounted to the first housing part 204. Furthermore, the first housing part 204 is located on top of the second housing part 206 when seen along the longitudinal axis X-X' of the water connector assembly 100. Further, during the mounting of the second housing part 204 onto the first housing part 204 to form the first water connection device 200, an annular collar 209 formed with an outer annular portion 207 of the second housing part 206 engages within an outer annular portion 205 of the first housing part 204.

Further, the second housing part 206 is movable relative to the first housing part 204. The relative movement between the second housing part 206 and the first housing part 204 is either a translatory movement or a rotatory movement. In other words, either the second housing part 206 is configured to move translationally relative to the first housing part 204 along the longitudinal axis X-X' or the second housing part 206 is configured to move rotationally relative to the first housing part 204 about the longitudinal axis X-X' of the water connector assembly 100.

Further, the first water connection device 200 comprises the female coupling element 208, wherein the further housing 202 at least partially houses the female coupling element 208. The female coupling element 208 comprises the at least one resilient locking element 210. The female coupling element 208 further comprises the actuating sleeve 212, which is adapted to functionally engage and disengage with the at least one resilient locking element 210. Further, the spring 214 is mounted to the female coupling element 208. When the second housing part 206 is configured move translationally relative to the first housing part 204, and vice-versa, the spring 214 is a compression spring, and when the second housing part 206 is configured move rotationally relative to the first housing part 204, and vice-versa, the spring 214 is a torsion spring. The spring 214 is mounted in the female coupling element 208 on an inside surface of the actuating sleeve 212.

Further, the second housing part 206 of the further housing 202 is connected to the actuating sleeve 212, wherein a movement of the second housing part 206 relative to the first housing part 204 is directly transferrable to the actuating sleeve 212. Further, the second housing part 206 and the actuating sleeve 212 are detachably connected to each other in a force-fitting manner or a formfitting manner.

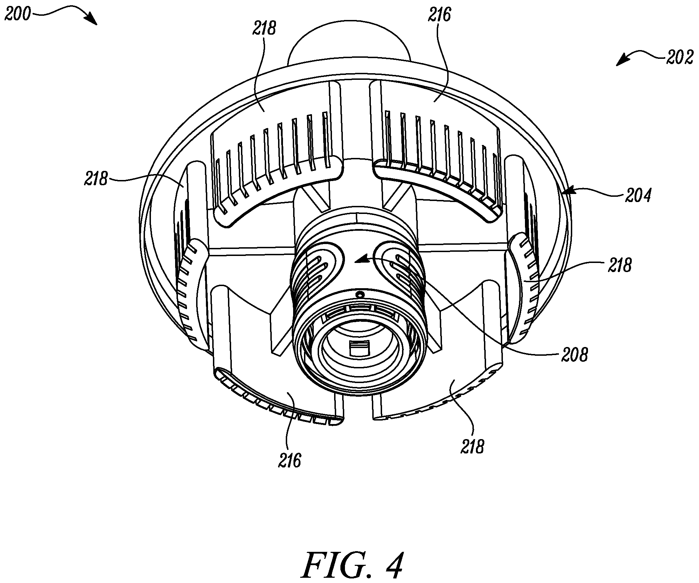

**FIG. 4** illustrates a bottom view of the first housing part 204 of the further housing 202 of the first water connection device 200. The first housing part 204 comprises at least one first support element 216 and at least one second support element 218. As may be seen in FIG. 4, the first housing part 204 comprises two first support elements 216 and four second support elements 218. Furthermore, all of the two first support elements 216 and the four second support elements 218 extend from the first housing part 204. The two first support elements 216 and the four second support elements 218 are annularly arranged around the female coupling element 208. Further, each of the at least one first support element 216 and/or the at least one second support element 218 is formed as a part of an annulus such that the part of the annulus extends over an angle of about 60°.

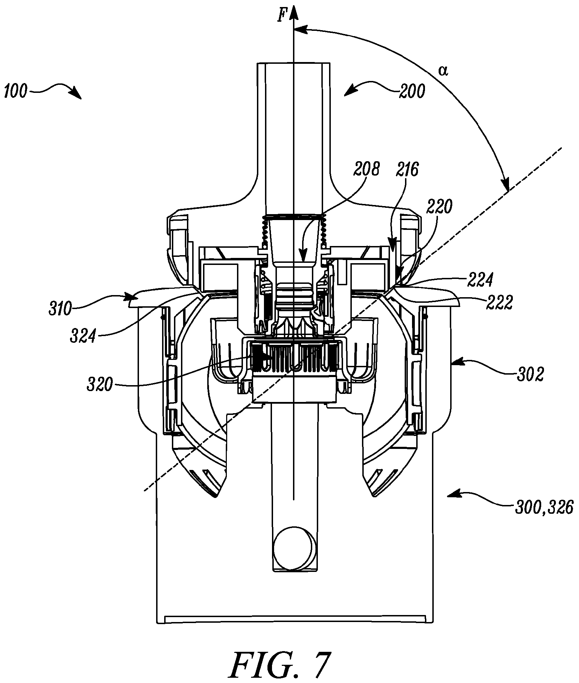

Each of the two first support elements 216 comprises a radially inner section 222 and a radially outer section 224. Further, each of the four second support elements 218 comprises a radially inner section 228 and a radially outer section 230. The radially inner sections 222 and the radially inner sections 228 are formed substantially identical. The radially outer section 228 and the radially outer sections 230 are formed different, wherein the two radially outer sections 228 extend substantially perpendicular to a flow direction F (illustrated in **FIG. 7**) and are configured to inhibit a decoupling of the first water connection device 200 from the second water connection device 300. Furthermore, the four radially outer sections 230 of the second support elements 218 are formed inclined corresponding to the radially inner sections 228 and are configured to enable decoupling when a pre-defined lateral force exceeds a pre-defined value.

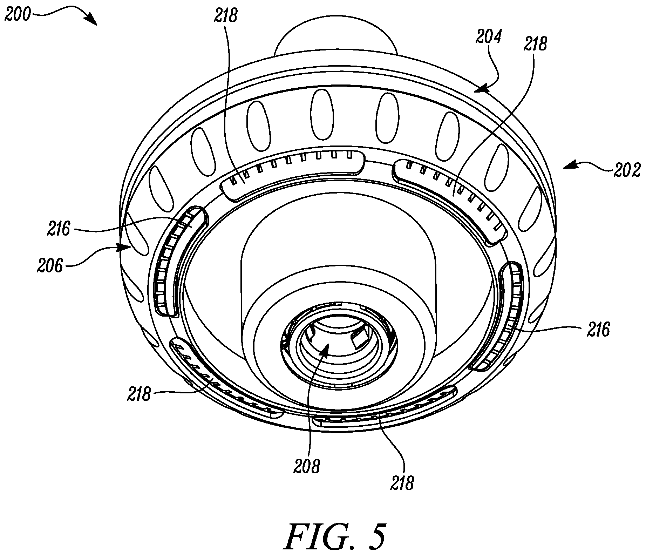

FIG. 5 illustrates a bottom view of the first water connection device 200 comprising the second housing part 206 mounted to the first housing part 204. The first water connection device 200 comprises two first support elements 216 and four second support elements 218, wherein one of the two first support elements 216 is arranged between two of the four second support elements 218, and two of the four second support elements 218 are arranged adjacent to each other. Further, the first housing part 204 comprises the female coupling element 208, wherein the at least one first support element 216 and the at least one second support element 218 are annularly arranged around the female coupling element 208.

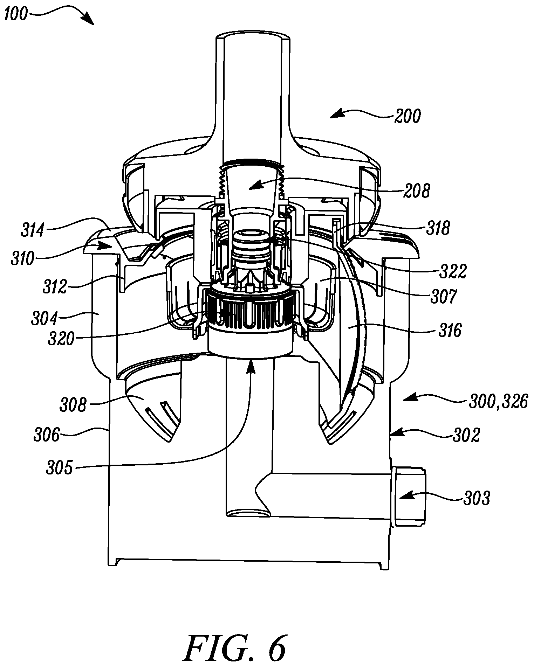

**FIG. 6** illustrates a cross-sectional view of the water connector assembly 100, with the first water connection device 200 and the second water connection device 300 in the coupled state. The first water connection device 200 is coupled to the second water connection device 300 via the female coupling element 208, wherein the first water connection device 200 receives water from the second water connection device 300 via the female coupling element 208.

The second water connection device 300 is a water station 326 or a water socket 326. The second water connection device 300 comprises a housing 302. The housing 302 is divided into an upper section 304 with a substantially circularcylindrical wall, and a lower section 306 in which a bottom 308 having a curved shape, is formed.

The housing 302 is closed at the top by a support surface 310 and a cover 316, both of which are removably mounted on the housing 302. The cover 316 is a curved body and is configured to be pivotable to an open state as illustrated in **FIG. 6****,** when the second water connection device 300 is removably coupled with the first water connection device 200. In the open state of the cover 316, the cover 316 is lowered downwards into the interior of the housing 302. Further, the cover 316 comprises a grip tab 318 configured to be grabbed by a user to pivot the cover 316 between the open state and the closed state.

Further, the support surface 310 comprises a vertically downwardly extending wall 312 within the upper section 304 of the housing 302. Further, the support surface 310 comprises a radially outwardly pointing projection 314 on the upper edge of the upper section 304. In other words, the support surface 310 takes support on the upper section 304 via the wall 312 and the projection 314.

Further, the second water connection device 300, or the housing 302 comprises a male coupling element 320 within the housing 302. The male coupling element 320 is at least partially arranged or housed in the upper section 304 of the housing 302. The male coupling element 320 is configured to transfer water received from a water inlet 303 to the first water connection device 200, when the first water connection device 200 is removably coupled to the second water connection device 300. The housing 302 of the second water connection device 300 comprises the water inlet 303 and a water outlet 305. The water inlet 303 is formed in the lower section 306 of the further housing 302 while the water outlet 305 is formed in the upper section 304, wherein the water inlet 303 is configured to receive water from an external water source while the water outlet 305 is configured to transfer water received from the water inlet 303 to the male coupling element 320. Further, the water inlet 303 is disposed substantially orthogonal to the water outlet 305.

Further, an annular strainer 307 is mounted into the upper section 304 around the male coupling element 320. The annular strainer 307 inhibits leaves and other dirt from entering into the lower section 306 The annular strainer 307 is arranged with an outer edge against an inner surface of the upper section 304 and with an inner edge against an outer surface of the male coupling element 320. Thereby, any potential dirt may be effectively inhibited from entering into the lower section 306 of the further housing 302.

**FIG. 7** illustrates another cross-sectional view of the water connector assembly 100, with the first water connection device 200 and the second water connection device 300 in the coupled state. The first water connection device 200 comprises the female coupling element 208, and the second water connection device 300 comprises the male coupling element 320, wherein the male coupling element 320 and the female coupling element 208 are coupled with each other. The water connector assembly 100 is configured such that, when the male coupling element 320 and the female coupling element 208 are removably coupled with each other, the male coupling element 320 and the female coupling element 208 are substantially entirely surrounded by the housing 302 and the further housing 202.

Further, the first water connection device 200 comprises the at least one first support element 216 and at least one second support element 218. The at least one first support element 216 and the at least one second support element 218 are arranged, particularly annularly arranged, around the female coupling element 208 such that the arrangement, particularly the annular arrangement, corresponds to the support surface 310.

Further, the at least one first support element 216 comprises a free end 220. The free end 220 of the at least one first support element 216 comprises a radially inner section 222 and a radially outer section 224 seen in a direction substantially perpendicular to the extension of the at least one first support element 216. The extension of the at least one first support element 216 is substantially parallel to a flow direction F as illustrated in **FIG. 7****.** The radially inner section 222 and the radially outer section 224 together form the free end 220. The radially inner section 222 of the at least one first support element 216 comprises a shape complementary to an inner side 324 of the support surface 310. When the first water connection device 200 is coupled with the second water connection device 300 and a lateral force is applied to the first water connection device 200, the radially inner section 222 of the at least one first support element 216 gets in contact with the inner side 324 of the support surface 310 while the radially outer section 224 gets in contact with an upper surface respectively the annular flange 307 of the support surface 310. When the first water connection device is coupled to the second water connection device and no lateral force is applied to the first water connection device 200, there is a gap between the radially inner section 222 and the inner side 324 of the support surface 310. At the same time, there is a gap between the radially outer section 224 of the first support element 216 and the upper surface respectively the annular flange 307 of the support surface 310.

Further, in the removably coupled state of the first water connection device 200 and the second water connection device 300, the radially inner section 222 of the at least one first support element 216 is inclined by an angle α relative to a flow direction F of a fluid (or water) flowing from the second water connection device 300 to the first water connection device 200. The angle α is less than 90° and greater than 0°, particularly less than 75° and greater than 15°, more particularly less than 60° and greater than 30°, even more particularly substantially equal to 45°.

Further, the radially outer section 224 of the free end 220 of, particularly each of, the at least one first support element 216 extends substantially perpendicular to the flow direction F of the fluid (or water) flowing from the second water connection device 300 to the first water connection device 200.

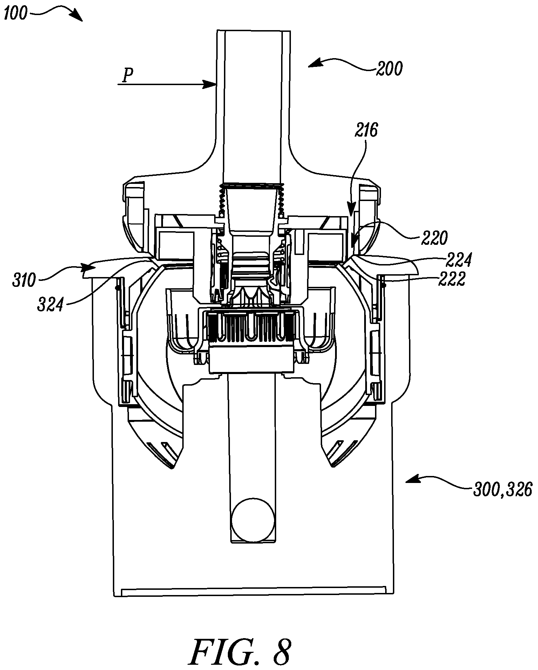

**FIG. 8** illustrates a cross-sectional view of the water connector assembly 100, with a lateral force P acting on the first water connection device 200. The free end 220 of the at least one first support element 216 is formed such that, when the lateral force P acting substantially perpendicular to an extension of the first support element 216 respectively to the flow direction F (illustrated in **FIG. 7**), acts on the first water connection device 200, the free end 220 contacts the support surface 310, and a decoupling of the first water connection device 200 from the second water connection device 300 is inhibited. When the lateral force P acting substantially perpendicular to the extension of the first support element 216, acts on the first water connection device 200, the first water connection device 200 tilts due to the lateral force P, the radially outer section 224 of the free end 220 of the first support element 216 contacts respectively takes support on the support surface 310. In addition, the radially inner section 222 gets in contact with the inner side 324 of the support surface 310. Thereby, further tilting of the first water connection device 200 is prevented. Consequently, the second housing part 206 solely slightly gets in contact with the support surface 310. Further, the second housing part 206 does not move translationally relative to the first housing part 204. Hence, decoupling of the first water connection device 200 from the second water connection device 300 is inhibited. Hence, the decoupling of the first water connection device 200 from the second water connection device 300 is also prevented.

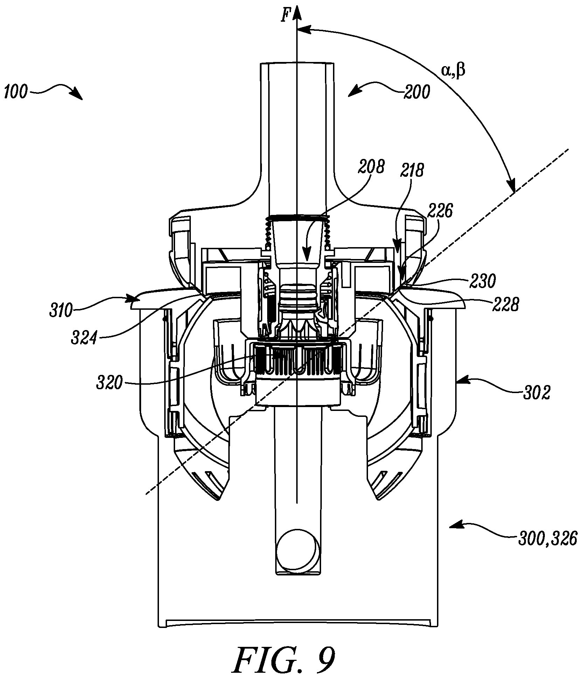

**FIG. 9** illustrates yet another cross-sectional view of the water connector assembly 100, with the first water connection device 200 and the second water connection device 300 in the coupled state. The first water connection device 200 comprises the female coupling element 208, and the second water connection device 300 comprises the male coupling element 320 and the housing 302 with the support surface 310 arranged around the male coupling element 320. The male coupling element 320 and the female coupling element 208 are removably couplable with each other and are entirely surrounded by the housing 302 and the further housing 202.

Further, the first water connection device 200 comprises the at least one first support element 216 and at least one second support element 218. The at least one first support element 216 and the at least one second support element 218 are annularly arranged around the female coupling element 208, wherein this annular arrangement corresponds to a shape of the support surface 310.

Further, the at least one second support element 218 comprises a free end 226. The free end 226 of the at least one second support element 218 comprises a radially inner section 228 and a radially outer section 230 seen in a direction substantially perpendicular to the extension of the support element 218. The radially inner section 228 and the radially outer section 230 together form the free end 226. The radially inner section 228 of each of the second support elements 218 comprises a shape complementary to the inner side 324 of the support surface 310. When the first water connection device 200 is coupled to the second water connection device 300 and no lateral force is applied to the first water connection device 200, there is a gap between the radially inner section 228 and the inner side 324 of the support surface 310. At the same time, there is a distance between the radially outer section 230 of the second support element 218 and the upper surface respectively the annular flange 307 of the support surface 310.

Further, the radially inner section 228 of the at least one second support element 218 is inclined by an angle α seen relative to a flow direction F of the fluid (or water) flowing from the second water connection device 300 to the first water connection device 200 respectively relative to the longitudinal axis X-X'. The angle α is less than 90° and greater than 0°, particularly less than 75° and greater than 15°, more particularly less than 60° and greater than 30°, even more particularly substantially equal to 45°.

Further, the radially outer section 230 of the free end 226 of, particularly each of, the at least one second support element 218 is inclined by an angle P relative to the flow direction F respectively the longitudinal axis X-X'. The angle β is less than 90° and greater than 0°, particularly less than 75° and greater than 15°, more particularly less than 60° and greater than 30°, even more particularly substantially equal to 45°.

The radially inner section 228 is inclined substantially similar to the radially outer section 230. In other words, the radially inner section 228 is inclined by an angle α and the radially outer section 230 is inclined by an angle β, wherein the angle α and the angle β are substantially equal to each other. Hence, the free end 226 of the second support element 218 comprises a continuously inclined end surface with substantially no edges.

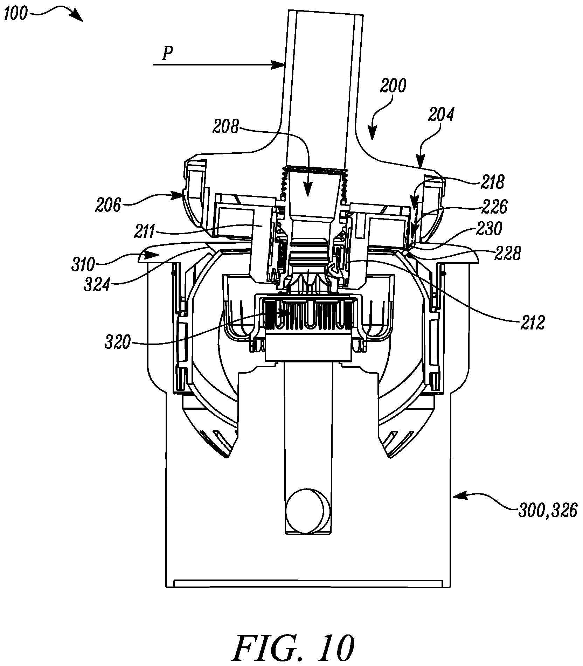

FIG. 10 illustrates another cross-sectional view of the water connector assembly 100, with the lateral force P acting on the first water connection device 200. The free end 226 of the at least one second support element 218 is formed such that, when the lateral force P acting substantially perpendicular to an extension of the second support element 218, acts on the first water connection device 200 and exceeds a pre-defined value, the free end 226 interacts with the inner side 324 of the support surface 310, and the first water connection device 200 is decoupled from the second water connection device 300. When the lateral force P acting substantially perpendicular to the extension of the first support element 216, acts on the first water connection device 200, the first water connection device 200 tilts due to the lateral force P, and radially inner section 228 together with the radially outer section 230 of the free end 226 gets in contact with and slides on respectively onto the inner side 324 of the support surface 310. As a result, the second housing part 206, particularly a lower surface of the second housing part 206, gets in contact with the support surface 310, particularly in contact with the annular flange 307. Due to the contact of the second housing part 206 with the support surface 310, the second housing part 206 moves translationally relative to the first housing part 204, and into the first housing part 204. This translatory movement also causes to translationally move the inner annular portion 211. Due to the translatory movement of the inner annular portion 211 of the second housing part 206, the actuating sleeve 212 also moves translationally as the inner annular portion 211 is connected to the actuating sleeve 212. Consequently, the female coupling element 208 is decoupled from the male coupling element 320 and the first water connection device 200 is decoupled from the second water connection device 300.

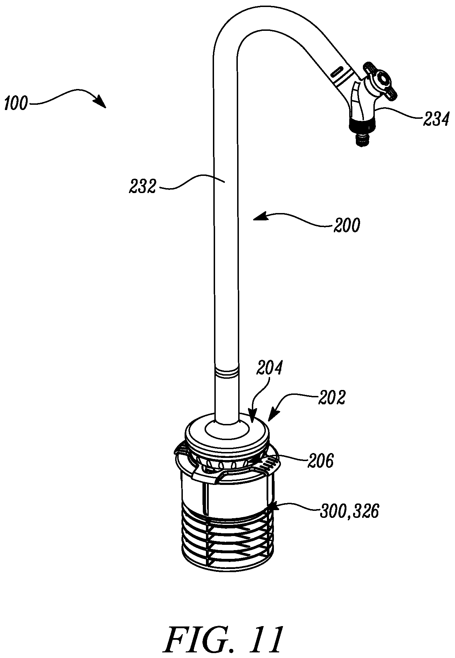

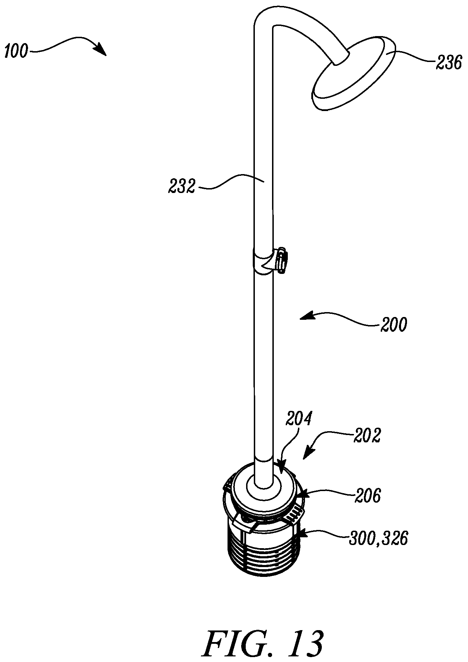

FIG. 11 illustrates a perspective view of the water connector assembly 100 with an upright pipe unit 232 with an attachable tap 234 being removably coupled with the second water device 300 being a water socket 326. Alternatively, the first water connection device 200 may be one of the group comprising a hose box (not shown), a hose holder (not shown), a water computer (not shown) and an upright pipe unit 232 with an attachable garden shower 236 (as shown in FIG. 13) or tap 234. Further, the second water connection device 300 is the water socket 326. As illustrated in FIG. 11, the upright pipe unit 232 is integrally or removably formed with the first housing part 204 of the further housing 202 of the first water connection device 200.

When the first water connection device 200 is removably coupled with the second water connection device 300, the water from the water socket 326 flows into the first water connection device 200 via the female coupling element 208and further the water flows through the upright pipe unit 232 and further into the tap 234 for distribution in a regulated manner.

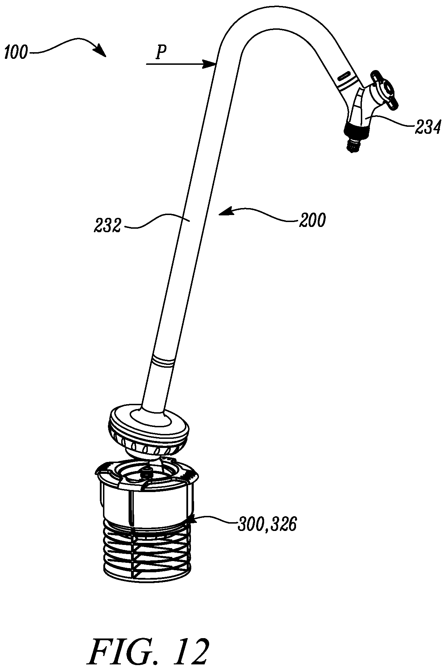

FIG. 12 illustrates a perspective view of the water connector assembly 100 with the upright pipe unit 232 with the attachable tap 234 decoupled from the water socket 326. During decoupling, when the lateral force P acting substantially perpendicular to the extension of the second support element 218, acts on the upright pipe unit 232 with the attachable tap 234 and exceeds the pre-defined value, the free end 226 of the at least one second support element 218 interacts with the inner side 324 of the support surface 310, and the first water connection device 200 is decoupled from the water socket 326.

FIG. 13 illustrates a perspective view of the water connector assembly 100 with the upright pipe unit 232 with an attachable garden shower 236 being removably coupled with the water socket 326. The upright pipe unit 232 is integrally or removably formed with the first housing part 204 of the further housing 202 of the first water connection device 200.

When the first water connection device 200 is removably coupled with the second water connection device 300, the water from the water socket 326 flows into the first water connection device 200 via the female coupling element 208 and further through the upright pipe unit 232. Subsequently, the water flows through the garden shower 236 for further distribution.

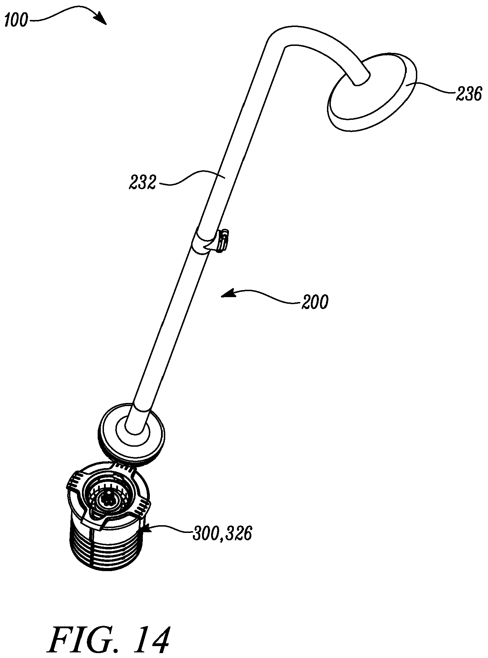

FIG. 14 illustrates a perspective view of the water connector assembly 100 with the upright pipe unit 232 with the attachable garden shower 236 decoupled from the water socket 326. During decoupling, when the lateral force P acting substantially perpendicular to the extension of the second support element 218, acts on the upright pipe unit 232 with the attachable garden shower 236 and exceeds the pre-defined value, the free end 226 of the at least one second support element 218 interacts with the inner side 324 of the support surface 310, and the first water connection device 200 is decoupled from the water socket 326.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Water Connector Assembly
- **200**: First Water Connection Device
- **202**: Further Housing
- **204**: First Housing Part
- **205**: Outer Annular Portion
- **206**: Second Housing Part
- **207**: Outer Annular Portion
- **208**: Female Coupling Element
- **209**: Annular Collar
- **210**: Resilient Locking Element
- **211**: Inner Annular Portion
- **212**: Actuating Sleeve
- **214**: Spring
- **216**: First Support Element
- **218**: Second Support Element
- **220**: Free End
- **222**: Radially Inner Section
- **224**: Radially Outer Section
- **226**: Free End
- **228**: Radially Inner Section
- **230**: Radially Outer Section
- **232**: Upright Pipe Unit
- **234**: Tap
- **236**: Garden Shower
- **300**: Second Water Connection Device
- **302**: Housing
- **303**: Water Inlet
- **304**: Upper Section
- **305**: Water Outlet
- **306**: Lower Section
- **307**: Annular Flange
- **308**: Bottom
- **310**: Support Surface
- **312**: Wall
- **314**: Projection
- **316**: Cover
- **318**: Grip Tab
- **320**: Male Coupling Element
- 322: Nipple Portion
- **324**: Inner Side
- **326**: Water Socket/ Water Station
- X-X': Longitudinal Axis
- **F1**: Pushing Force
- F: Flow Direction
- P: Lateral Force

## Claims

1. A water connector assembly **(100)** for a garden watering application, the water connector assembly **(100)** comprising:
a first water connection device **(200)** comprising a female coupling element **(208),** and
a second water connection device **(300)** comprising a male coupling element **(320)** and a housing **(302)** with a support surface **(310),**
particularly a substantially ring-shaped support surface **(310),** arranged around the male coupling element **(320),**
wherein the male coupling element **(320)** and the female coupling element **(208)** are removably couplable with each other,
wherein the first water connection device **(200)** further comprises at least one first support element **(216)** and at least one second support element **(218), characterized in that:**
the at least one first support element **(216)** and the at least one second support element **(218)** are arranged, particularly annularly arranged, around the female coupling element **(208)** such that the arrangement, particularly the annular arrangement, corresponds to the support surface **(310),**
wherein a free end **(220)** of the at least one first support element **(216)** is formed such that, when a lateral force (P) acting substantially perpendicular to an extension of the first support element **(216),** acts on the first water connection device **(200),** the free end **(220)** contacts the support surface **(310),**
and a decoupling of the first water connection device **(200)** from the second water connection device **(300)** is inhibited, and
wherein a free end **(226)** of the at least one second support element **(218)** is formed such that, when a lateral force (P) acting substantially perpendicular to an extension of the second support element **(218),** acts on the first water connection device **(200)** and exceeds a pre-defined value, the free end **(226)** interacts with an inner side **(324)** of the support surface **(310),** and the first water connection device **(200)** is decoupled from the second water connection device **(300).**

2. The water connector assembly **(100)** according to claim **1,**
wherein the free end **(220)** of each of the at least one first support element **(216)** is further formed such that an overload of the male coupling element **(320)** is inhibited.

3. The water connector assembly **(100)** according to any one of the preceding claims,
wherein each of the at least one first support element **(216)** and/or the at least one second support element **(218)** is formed as a part of an annulus, wherein the part of the annulus extends over an angle of substantially **120°,** in particular **90°,** more in particular **60°.**

4. The water connector assembly **(100)** according to any one of the preceding claims,
wherein the at least one first support element **(216)** is two first support elements **(216),** and/ or
wherein the at least one second support element **(218)** is four second support elements **(218),**
particularly wherein one of the two first support elements **(216)** is arranged between two of the four second support elements **(218),** and two of the four second support elements **(218)** are arranged adjacent to each other.

5. The water connector assembly **(100)** according to any one of the preceding claims,
wherein the free end **(220, 226)** of, particularly each of, the at least one first support element **(216)** and the at least one second support element **(218)** comprises a radially inner section **(222, 228)** and a radially outer section **(224, 230)** seen in a direction substantially perpendicular to the extension of the respective support element **(216, 218),** wherein the radially inner section **(222, 228)** and the radially outer section **(224, 230)** together form the free end **(220, 226),**
in particular wherein the radially inner section **(222, 228)** of, particularly each of, the at least one first support element **(216)** and the at least one second support element **(218)** comprises a shape complementary to the inner side **(324)** of the support surface **(310).**

6. The water connector assembly **(100)** according to claim **5,**
wherein the radially inner section **(222, 228)** of, particularly each of, the at least one first support element **(216)** and/or the at least one second support element **(218)** is inclined by an angle α relative to a flow direction **(F)** of a fluid flowing from the second water connection device **(300)** to the first water connection device **(200),** wherein the angle α is less than **90°** and greater than **0°,** particularly less than **75°** and greater than **15°,** more particularly less than **60°** and greater than **30°,** even more particularly substantially equal to **45°.**

7. The water connector assembly **(100)** according to claim **5** or claim **6,**
wherein the radially outer section **(224)** of the free end **(220)** of, particularly each of, the at least one first support element **(216)** extends substantially perpendicular to a flow direction **(F)** of a fluid flowing from the second water connection device **(300)** to the first water connection device **(200).**

8. The water connector assembly **(100)** according to any one of the claims **5** to **7,**
wherein the radially outer section **(230)** of the free end **(226)** of, particularly each of, the at least one second support element **(218)** is inclined by an angle β relative to a flow direction **(F)** of a fluid flowing from the second water connection device **(300)** to the first water connection device **(200),**
wherein the angle β is less than **90°** and greater than **0°,** particularly less than **75°** and greater than **15°,** more particularly less than **60°** and greater than **30°,** even more particularly substantially equal to **45°.**

9. The water connector assembly **(100)** according to claim **8,**
wherein the angle β is substantially equal to the angle α.

10. The water connector assembly **(100)** according to any one of the preceding
claims,
wherein the first water connection device **(200)** further comprises a further housing **(202)** at least partially housing the female coupling element **(208),** wherein the further housing **(202)** comprises a first housing part **(204)** and a second housing part **(206),** wherein the second housing part **(206)** is movable relative to the first housing part **(204).**

11. The water connector assembly **(100)** according to claim **10,**
wherein, particularly each of, the at least one first support element **(216)** and at least one second support element **(218)** extend from the first housing part **(204).**

12. The water connector assembly **(100)** according to any one of the preceding
claims,
wherein the water connector assembly **(100)** is configured such that, when the the male coupling element **(320)** and the female coupling element **(208)** are removably coupled with each other, the male coupling element **(320)** and the female coupling element **(208)** are at least partially surrounded by the housing **(302)** and the further housing **(202).**

13. The water connector assembly **(100)** according to any one of the preceding
claims,
wherein the first water connection device **(200)** is one of the group comprising a hose box, a hose holder, and an upright pipe unit **(232)** with an attachable garden shower **(236),** a water computer or a tap **(234).**

14. The water connector assembly **(100)** according to any one of the preceding
claims,
wherein the second water connection device **(300)** is a water station **(326)** or a water socket **(326).**
